# EUROPEAN PATENT APPLICATION

(11) **EP 2 783 813 A2**
(43) Date of publication of application: **01.10.2014**
(21) Application number: 14160180.7
(22) Date of filing: 17.03.2014
(51) Int. Cl.: B25J 9/16

(54) **Robot system and method for manufacturing to-be-processed material**

(30) Priority: 19.03.2013 JP 2013056701
(71) Applicant: Kabushiki Kaisha Yaskawa Denki, Kitakyushu-shi, Fukuoka 806-0004 (JP)
(72) Inventor: Sawada, Yukiko, Kitakyushu-shi, Fukuoka 806-0004 (JP); Asahi, Takefumi, Kitakyushu-shi, Fukuoka 806-0004 (JP)
(74) Representative: Viering, Jentschura & Partner Patent- und Rechtsanwälte

(57) **Abstract**

A robot system 1 includes a robot 51L, 51R, an image capture device 9, and a setting device 3. The image capture device 9 is fixed at a position external to the robot 51L, 51R, and configured to capture an image of a range including the robot 51L, 51R and a vicinity of the robot 51L, 51R. The setting device 3 is configured to generate area information on an area defining an operation of the robot 51L, 51R based on the image captured by the image capture device 9.

## Description

### BACKGROUND

### FIELD OF THE INVENTION

The present invention relates to a robot system and a method for manufacturing a to-be-processed material.

### DISCUSSION OF THE BACKGROUND

In recent years, there has been an increasing demand for automating work using a robot, instead of by humans. Japanese Patent No. 4648486 discloses that various areas defined for the operation of the robot are set in a robot controller.

The contents of Japanese Patent No. 4648486 are incorporated herein by reference in their entirety.

In robot systems including robots, there is a demand for improved efficiency in teaching. This is achieved by facilitating the setting of the areas defining the operation of the robot.

It is an object of the present invention to provide a robot system and a method for manufacturing a to-be-processed material that ensure improved efficiency in teaching by facilitating the setting of the areas defining the operation of the robot.

### SUMMARY

According to one aspect of the present disclosure, a robot system 1 includes a robot 51L, 51R, an image capture device 9, and a setting device 3. The image capture device 9 is fixed at a position external to the robot 51L, 51R, and configured to capture an image of a range including the robot 51L, 51R and a vicinity of the robot 51L, 51R. The setting device 3 is configured to generate area information on an area defining an operation of the robot 51L, 51R based on the image captured by the image capture device 9.

The present disclosure provides a robot system and a method for manufacturing a to-be-processed material that ensure improved efficiency in teaching by facilitating the setting of the areas defining the operation of the robot.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic view of a robot system according to an embodiment;
FIG. 2 shows an image captured by an image capture device;
FIG. 3 shows exemplary elements stored in a storage section; and
FIG. 4 shows an exemplary area defining an operation of the robot.

### DESCRIPTION OF THE EMBODIMENTS

The embodiments will now be described with reference to the accompanying drawings, wherein like reference numerals designate corresponding or identical elements throughout the various drawings.

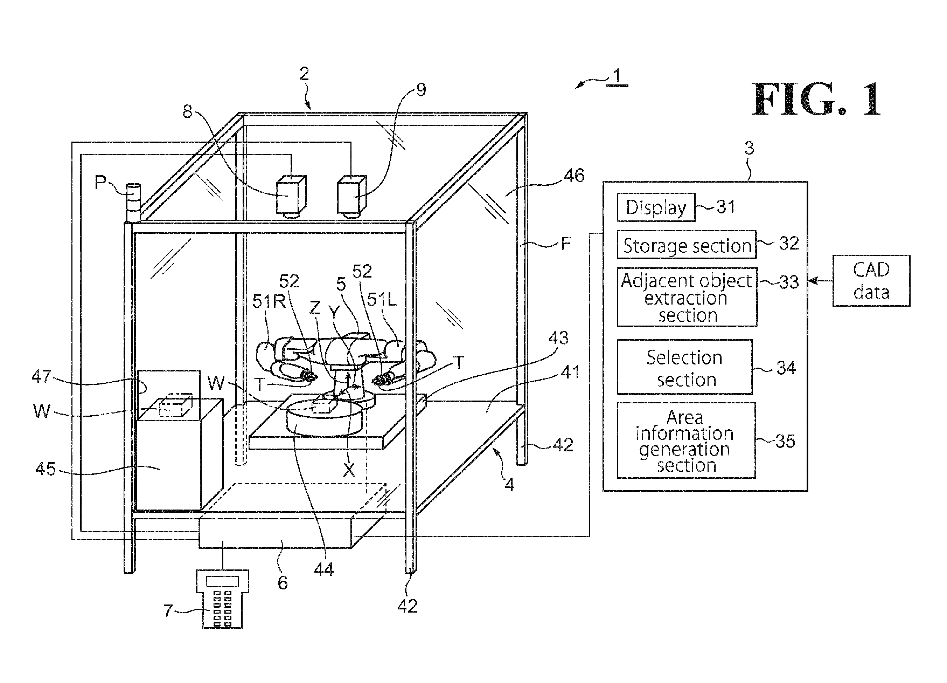

As shown in FIG. 1, a robot system 1 includes a robot cell 2 and a setting device 3. The robot cell 2 includes a frame 4, a two-arm robot 5, a robot controller 6, a projector 8, and a camera (image capture device) 9. A plurality of such robot cells 2 may be aligned to form a production line. In forming a production line of a plurality of aligned robot cells 2, the setting device 3 may be provided for each of the robot cells 2 or may be shared among the plurality of robot cells 2.

The frame 4 supports the two-arm robot 5. The frame 4 includes a support plate 41 and four legs 42. The support plate 41 is in the form of a rectangular plate, and the legs 42 are disposed under the support plate 41. A base 43 in the form of a rectangular plate is disposed on the support plate 41. The two-arm robot 5 is disposed on the base 43. Also on the base 43, a work table 44 is disposed at a position separated from the two-arm robot 5. The two-arm robot 5 works on the work table 44.

On the support plate 41A, a handover stand 45 is disposed at a position separated from the base 43 (at a corner of the support plate 41 in FIG. 1). A workpiece W is placed onto the handover stand 45 and handed over between the two-arm robot 5 and an operator. An example of the workpiece W to be handed over is a tool T to be used by the two-arm robot 5.

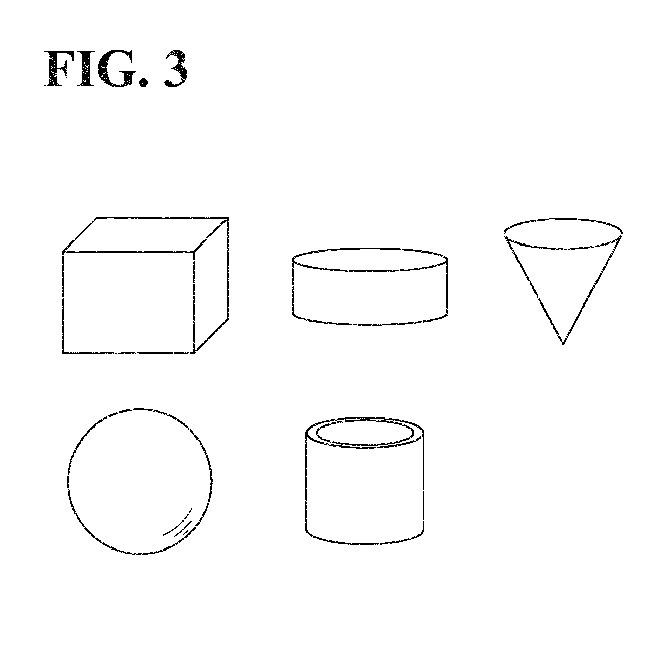

The shapes of the work table 44 and the handover stand 45 used in the robot system 1 may be standardized. In this case, the shapes of the work table 44 and the handover stand 45 are selected from among a plurality of predetermined shapes. Examples of the predetermined shapes include, but are not limited to, a rectangular parallelepiped (hexahedron), a column, a cone, a sphere, and a cylinder (see FIG. 3). Each of these shapes may vary in size. The predetermined shapes may include other shapes such as a polyhedron other than a hexahedron, and a tubular shape other than a cylinder. In this embodiment, the work table 44 has a column shape, and the handover stand 45 has a rectangular parallelpiped shape.

The support plate 41 is provided with a cover 46, which covers the base 43, the work table 44, and the handover stand 45 on the sides and top. The cover 46 includes side plates, a ceiling plate, and a frame F. The side plates extend upward from the four sides of the support plate 41. The ceiling plate is disposed on top of the side plates. The frame F supports the side plates and the ceiling plate. The frame F includes vertical columns and horizontal columns. The vertical columns extend upward from the four corners of the support plate 41. The horizontal columns couple the upper ends of the vertical columns to each other. An example of the side plates and the ceiling plate of the cover 46 is a transparent material (for example, polycarbonate), which makes the inside of the robot cell 2 viewable from outside. A handover port 47 is formed in a portion of one of the side plates of the cover 46 that is adjacent to the handover stand 45. The operator is able to put the operator's hand through the handover port 47. An indicator light P is mounted to the frame F to indicate the operation status of the robot cell 2.

The two-arm robot 5 includes a left arm 51L and a right arm 51R. The left arm 51L and the right arm 51R are able to cooperate together to work, and work independently from each other. That is, the left arm 51L and the right arm 51R each function as a robot. The left arm 51L and the right arm 51R each have a multi-articular structure and include a coupling 52 at the distal end of each arm. The left arm 51L and the right arm 51R are each able to operate with six degrees of freedom implemented by a plurality of actuators incorporated in the two-arm robot 5. This enables the coupling 52 to take various kinds of position and posture. The tool T is mounted to the coupling 52. The left arm 51L and the right arm 51R may have any other degrees of freedom, such as five degrees of freedom and seven or more degrees of freedom.

The robot controller 6 controls the operation of the two-arm robot 5, and also controls the projector 8 and the camera 9. An example of the robot controller 6 is a computer including an arithmetic operation device, a storage device, and an input-output device. Examples of the information input and output to and from the robot controller 6 include, but are not limited to, information (area information) on an area defining the operation of the left arm 51L and the right arm 51R, and one or more programs (jobs) specifying a series of operations of the left arm 51L and the right arm 51R.

The area defining the operation of the left arm 51L and the right arm 51R includes a robot operation area, a cooperative operation area, and an entry prohibited area. The left arm 51L and the right arm 51R are allowed to enter the robot operation area. The robot operation area is an area other than the cooperative operation area and the entry prohibited area.

The operator or at least one of the left arm 51L and the right arm 51R having permission to enter the cooperative operation area is allowed to enter the cooperative operation area. Examples of the cooperative operation area include, but are not limited to, an area above the work table 44 and an area above the handover stand 45. The cooperative operation area may be divided into a first cooperative operation area and a second cooperative operation area. In the first cooperative operation area, the left arm 51L and the right arm 51R may operate in cooperation without the operator entering the first cooperative operation area. In the second cooperative operation area, the two-arm robot 5 and the operator may operate in cooperation. For example, the cooperative operation area above the work table 44 may be the first cooperative operation area, where at least one of the left arm 51L and the right arm 51R having permission to enter is allowed to enter. The cooperative operation area above the handover stand 45 may be the second cooperative operation area, where the operator or at least one of the left arm 51L and the right arm 51R having permission to enter is allowed to enter.

The left arm 51L and the right arm 51R are prohibited from entering the entry prohibited area, since the entry prohibited area is set to prevent the left arm 51L and the right arm 51R from colliding with an object adjacent to the left arm 51L and the right arm 51R. Examples of the entry prohibited area include, but are not limited to, an area where those objects such as the support plate 41, the base 43, the work table 44, the handover stand 45, and the cover 46 exist, and an area outside the cover 46. For more improved security, the entry prohibited area may further include an area that is within a predetermined distance from the object.

The robot controller 6 is disposed under the support plate 41, for example. The two-arm robot 5 and the robot controller 6 are in wired connection. The two-arm robot 5 and the robot controller 6 may be coupled to each other wirelessly, or the two-arm robot 5 may incorporate the robot controller 6.

The area information, the job(s), and other information in the robot controller 6 can be set or amended at the site by the operator using a teaching pendant 7 (which is online teaching). The teaching pendant 7 may be coupled to the robot controller 6 through a wire or wirelessly.

Based on the area information input into the robot controller 6, the projector 8 projects an area defining the operation of the left arm 51L and the right arm 51R onto the object adjacent to the two-arm robot 5. The projector 8 is secured on the ceiling plate of the cover 46 and oriented in a downward direction. The projector 8 emits light from above the two-arm robot 5. Examples of the object onto which the area is projected include, but are not limited to, the support plate 41, the base 43, the work table 44, the handover stand 45, and the cover 46. The projector 8 may be coupled to the robot controller 6 through a wire or wirelessly.

The camera 9 captures an image of a range of space that includes the two-arm robot 5 and the object adjacent to the two-arm robot 5. The camera 9 is secured next to the projector 8 on the ceiling plate of the cover 46 and oriented in a downward direction. The camera 9 captures the image from above the two-arm robot 5. The camera 9 is coupled to the robot controller 6 through a wire. This ensures that the image captured by the camera 9 is transmitted to the setting device 3 through the robot controller 6. The camera 9 may be coupled to the robot controller 6 wirelessly.

The setting device 3 generates the area information, the job(s), and other information to be set in the robot controller 6 (by offline teaching). An example of the setting device 3 is a computer including an arithmetic operation device, a storage device, and an input-output device. The setting device 3 receives CAD data as information on the two-arm robot 5 and the object adjacent to the two-arm robot 5. The setting device 3 displays a virtual space on a display 31, described later, using the CAD data. It is also possible for the setting device 3 to receive size information on the two-arm robot 5 and the object adjacent to the two-arm robot 5, and for setting device 3 itself to generate the CAD data on the two-arm robot 5 and the object adjacent to the two-arm robot 5 based on the received information. The setting device 3 receives through the robot controller 6 the image captured by the camera 9.

The setting device 3 includes the display 31, a storage section 32, an adjacent object extraction section 33, a selection section 34, and an area information generation section 35. An example of the display 31 is a liquid crystal display. The display 31 displays various kinds of information such as the CAD data and an image captured by the camera 9.

The storage section 32 stores a plurality of elements of predetermined shapes. When the work table 44 and the handover stand 45 are standardized, the shapes of the elements may be set in accordance with the shapes of the work table 44 and the handover stand 45. As shown in FIG. 3, exemplary shapes of the elements include, but are not limited to, a rectangular parallelepiped (hexahedron), a column, a cone, a sphere, and a cylinder (see FIG. 3). The storage section 32 may store these elements in various sizes, and these elements may be variable in size. The shapes of these elements may include other shapes such as a polyhedron other than a hexahedron, and a tubular shape other than a cylinder.

From the image captured by the camera 9, the adjacent object extraction section 33 extracts an object adjacent to the two-arm robot 5. In this embodiment, the adjacent object extraction section 33 extracts the work table 44 and the handover stand 45 from the image.

Based on the image captured by the camera 9, the selection section 34 selects an element corresponding to the outer shape of the object adjacent to the two-arm robot 5 from among the plurality of elements stored in the storage section 32.

The area information generation section 35 generates the area information using the CAD data and the element selected by the selection section 34. An example of the area information generated by the area information generation section 35 is an area coordinate value in a coordinate system that is based on a predetermined point in the robot cell 2 (examples of the area coordinate value including an X coordinate value, a Y coordinate value, a Z coordinate value, and a combination of these values). When the operator checks the information displayed on the display 31 and inputs an instruction, the area information generation section 35 generates the area information based on the input instruction. The setting device 3 may automatically generate the area information from the CAD data.

While the setting device 3 is coupled to the robot controller 6 through a wire, the setting device 3 may also be coupled to the robot controller 6 wirelessly, or the setting device 3 may not be coupled to the robot controller 6. When the setting device 3 is not coupled to the robot controller 6, the area information generated by the setting device 3 may be stored in a storage medium. The storage medium then may be coupled to the robot controller 6 so that the area information is input into the robot controller 6. Alternatively, the storage medium may be used to input the image captured by the camera 9 into the setting device 3. Each of the adjacent object extraction section 33, the selection section 34, and the area information generation section 35 may be implemented in the form of software or hardware.

Next, an exemplary operation of the robot system 1 will be described.

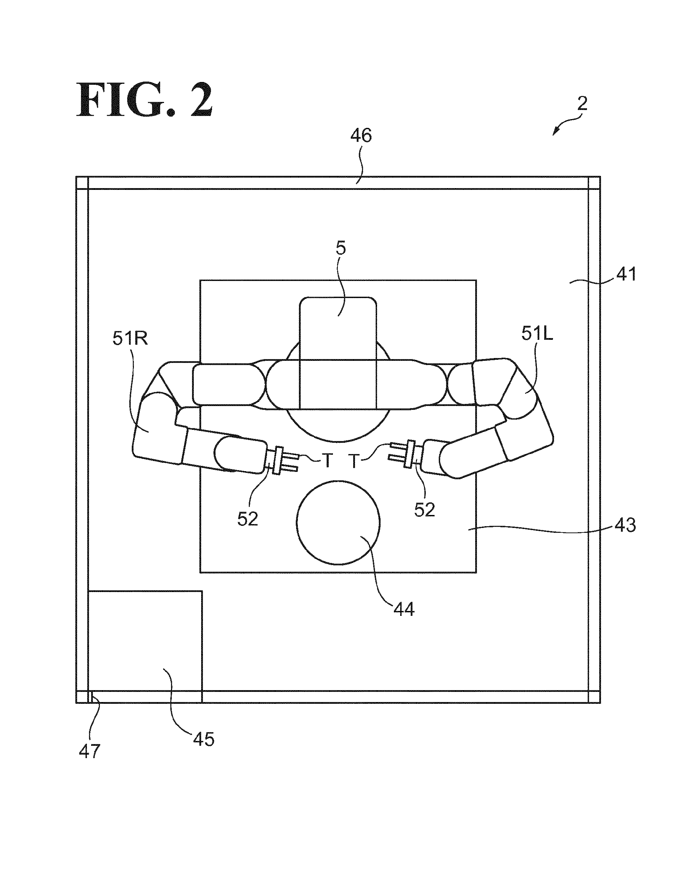

As shown in FIG. 2, in the robot system 1, first, the camera 9 captures an image of a range including the two-arm robot 5 and the object adjacent to the two-arm robot 5. The image captured by the camera 9 is input to the setting device 3 through the robot controller 6.

Then, the adjacent object extraction section 33 extracts the work table 44 and the handover stand 45 from the image captured by the camera 9. The extraction may be performed using a known image processing technique.

Then, the display 31 displays the image captured by the camera 9. The display 31 also displays an instruction to select elements respectively corresponding to the work table 44 and the handover stand 45 from among the elements stored in the storage section 32.

When the operator inputs an instruction into the setting device 3, the selection section 34 sets an element instructed by the operator as the element to be selected. In this embodiment, the operator inputs an instruction to select a column of a predetermined size as the element corresponding to the work table 44 and to select a rectangular parallelpiped shape of a predetermined size as the element corresponding to the handover stand 45. The selection section 34 sets the elements as the elements to be selected.

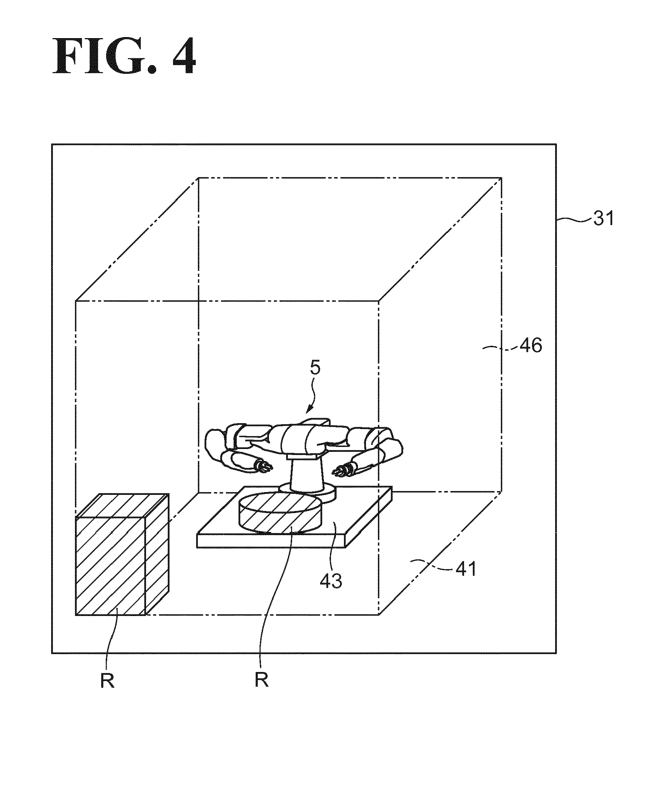

Then, as shown in FIG. 4, the display 31 displays CAD data of the two-arm robot 5, the supporting plate 41, the base 43, and the cover 46, and also displays the elements selected by the selection section 34. Then, the display 31 displays an instruction to set an area defining the operation of the left arm 51L and the right arm 51R.

When the operator inputs the instruction, then based on the input information, the area information generation section 35 generates area information on the area defining the operation of the left arm 51L and the right arm 51R. As shown in FIG. 4, in this embodiment, the operator inputs an instruction to set, as entry prohibition areas R, the area including the columnar element corresponding to the work table 44 and the area including the rectangular parallelpiped element corresponding to the handover stand 45. The area information generation section 35 generates area information of these entry prohibition areas R.

Then, the area information generated by the setting section 3 is input into the robot controller 6. Then, based on the area information input into the robot controller 6, the projector 8 projects the entry prohibited areas R respectively onto the work table 44 and the handover stand 45 (this projection is not shown). Thus, a series of operations is complete.

As has been described hereinbefore, in the robot system 1 according to this embodiment, the camera 9 is fixed at a position external to the two-arm robot 5, and captures a range of space including the two-arm robot 5 and an object adjacent to the two-arm robot 5. Then, based on the image captured by the camera 9, the setting device 3 generates area information of the area defining the operation of the left arm 51L and the right arm 51R. This ensures that information useful for generating the area information is obtained in advance from the image captured by the camera 9. This, in turn, shortens the time required for setting the area information to be set in the robot controller 6, as compared with the case of the area information being generated without any information. This, as a result, simplifies the setting of the areas and improves teaching efficiency.

In the robot system 1, the left arm 51L and the right arm 51R process a workpiece W using the work table 44 and the handover stand 45, which are disposed adjacent the robot 2. The setting section 3 sets area information in accordance with the outer shapes of the work table 44 and the handover stand 45 captured by the camera 9. Since the work table 44 and the handover stand 45 are used in the processing of a workpiece W, the left arm 51L and the right arm 51R frequently come close to the work table 44 and the handover stand 45 while the robot system 1 is in operation. In view of this, the area information is generated in accordance with the captured image of the outer shapes of the work table 44 and the handover stand 45. This ensures improved safety.

The setting section 3 includes the storage section 32 and the selection section 34. The storage section 32 stores a plurality of elements of predetermined shapes. The selection section 34 selects an element from among the plurality of elements. The setting device 3 uses the element selected by the selection section 34 to generate the area information. Generating the area information using the element of the predetermined shape saves the setting device 3 the load involved in the generation of the area information. For example, when the work table 44 and the handover stand 45 are standardized as described above, the storage section 32 may store elements corresponding to the shapes of the work table 44 and the handover stand 45. This facilitates the selection of the elements corresponding to the work table 44 and the handover stand 45. This, in turn, shortens the time required for generating the area information.

The setting section 3 further includes the display 31. The display 31 displays images for the operator. The selection section 34 selects an element to be selected based on the instruction input from the operator. It is the operator, who is able to check the image displayed on the display 31, that determines which element to select. This saves the setting section 3 the load involved in the selection of the element.

The area defining the operation of the left arm 51L and the right arm 51R includes the robot operation area, the cooperative operation area, and the entry prohibited area. The left arm 51L and the right arm 51R are allowed to enter the robot operation area. The operator or at least one of the left arm 51L and the right arm 51R having permission to enter the cooperative operation area is allowed to enter the cooperative operation area. The left arm 51L and the right arm 51R are prohibited from entering the entry prohibited area. The area information on the areas is generated based on the image of the range including the two-arm robot 5. This simplifies the setting of the areas.

The robot system 1 includes the frame 4. The frame 4 supports the two-arm robot 5 and defines the robot cell 2. When a plurality of the robot cells 2 are aligned to form a production line, since the setting of each of the areas is simplified in each of the robot cells 2, efficiency improves throughout the work of area setting and the teaching work. This shortens the time required for actuating the entire production line.

Similar advantageous effects are obtained in a method for producing a to-be-processed material when a workpiece is obtained using the robot system 1. Examples of the workpiece include, but are not limited to, parts such as bolts and assembled structures such as automobiles.

Obviously, numerous modifications and variations of the present disclosure are possible in light of the above teachings. It is therefore to be understood that within the scope of the appended claims, the present disclosure may be practiced otherwise than as specifically described herein. For example, the work table 44 and the handover stand 45 may not be standardized. In this case, based on the image captured by the camera 9, it is possible to select elements of shapes similar to the outer shapes of the work table 44 and the handover stand 45 in the image from among a plurality of elements stored in the storage section 32.

In the above-described embodiment, the projector 8 and the camera 9 are secured on the ceiling plate of the cover 46. Another possible example is that the projector 8 and the camera 9 are secured on a side plate of the cover 46. When the camera 9 is secured on a side plate of the cover 46, information on the dimensions of the work table 44 and the handover stand 45 in the height direction (Z direction) is obtained. This ensures suitable selection of elements similar to the outer shapes of the work table 44 and the handover stand 45. The projector 8 and the camera 9 may also be secured at a position outside the robot cell 2. That is, the projector 8 only needs to be secured at a position from which the projector 8 is able to project the area onto the object adjacent to the two-arm robot 5. The camera 9 only needs to be secured at a position where the camera 9 is able to capture an image of a range of space that includes the two-arm robot 5 and the object adjacent to the two-arm robot 5. The projector 8 and the camera 9 each may be provided in plural.

In the above-described embodiment, the projector 8 and the camera 9 are coupled to the robot controller 6, and input and output data and information to and from the setting device 3 through the robot controller 6. Another possible example is that at least one of the projector 8 and the camera 9 is coupled to the setting device 3 without the intervention of the robot controller 6, and controlled by the setting device 3.

In the above-described embodiment, the adjacent object extraction section 33 automatically extracts the work table 44 and the handover stand 45 from the image. Another possible example is that the operator, who is able to check the image displayed on the display 31, inputs an instruction into the setting section 3 to extract the work table 44 and the handover stand 45 from the image based on the input information.

In the above-described embodiment, based on the instruction input from the operator, the selection section 34 selects elements respectively corresponding to the work table 44 and the handover stand 45 from among the plurality of elements stored in the storage section 32. Another possible example is to automatically select elements similar to the work table 44 and the handover stand 45 based on the image captured by the camera 9.

In the above described embodiment, an image is captured with the work table 44 and the handover stand 45 in place. Another possible example is to capture an image without the work table 44 and the handover stand 45. Specifically, prior to the above-described operation of the robot system 1, the operator places marks (examples including a pointer held by the operator) at positions where the work table 44 and the handover stand 45 are to be disposed. Then, the camera 9 captures an image of a range including the two-arm robot 5 and the marks. Then, the adjacent object extraction section 33 extracts the marks from the image captured by the camera 9. Then, elements respectively corresponding to the work table 44 and the handover stand 45 to be provided are selected from among the plurality of elements stored in the storage section 32. This operation is otherwise similar to the above-described operation.

In the above-described embodiment, a single cylinder and a single rectangular parallelpiped are respectively selected as elements corresponding to the work table 44 and the handover stand 45. Another possible example is to select a plurality of elements and combine these elements to be used as the elements corresponding to the work table 44 and the handover stand 45.

In the above-described embodiment, the setting device 3 selects an element corresponding to an object adjacent to the two-arm robot 5 from among the plurality of elements stored in the storage section 32. Another possible example is that the setting device 3 generates a new element corresponding to the object adjacent to the two-arm robot 5 based on the image captured by the camera 9.

While in the above-described embodiment the frame 4 is provided with the cover 46, the cover 46 may not necessarily be provided. While in the above-described embodiment the robot is the two-arm robot 5 with the left arm 51L and the right arm 51R, the robot may have a single arm. The configuration, number, and material of each of the elements in the above-described embodiment should not be construed in a limiting sense, and are open to change.
- 1: Robot system
- 3: Setting device
- 4: Frame
- 5: Two-arm robot
- 9: Camera (image capture device)
- 31: Display
- 32: Storage device
- 34: Selection device
- 51L: Left arm (robot)
- 51R: Right arm (robot)

## Claims

1. A robot system 1, **characterized by**:
a robot 51L, 51R;
an image capture device 9 fixed at a position external to the robot 51L, 51R, and configured to capture an image of a range including the robot 51L, 51R and a vicinity of the robot 51L, 51R; and
a setting device 3 configured to generate area information on an area defining an operation of the robot 51L, 51R based on the image captured by the image capture device 9.

2. The robot system 1 according to claim 1,
wherein the robot 51L, 51R is configured to process a workpiece using an object adjacent to the robot 51L, 51R, and
wherein the setting device 3 is configured to generate the area information in accordance with an image of an outer shape of the object captured by the image capture device 9.

3. The robot system 1 according to claim 1 or 2,
wherein the setting device 3 comprises
a storage section 32 configured to store a plurality of elements of predetermined shapes, and
a selection section 34 configured to select one element from among the
plurality of elements, and
wherein the setting device 3 is configured to generate the area information using the one element selected by the selection section 34.

4. The robot system 1 according to claim 3,
wherein the setting device 3 further comprises a display 31 configured to display the image for an operator, and
wherein the selection section 34 is configured to select the one element based on an instruction input by the operator.

5. The robot system 1 according to any one of claims 1 to 4,
wherein the area comprises at least one of a robot operation area, a cooperative operation area, and an entry prohibited area,
wherein the robot 51L, 51R is allowed to enter the robot operation area,
wherein at least one of an operator and the robot 51L, 51R having permission to enter the cooperative operation area is allowed to enter the cooperative operation area, and
wherein the robot 51L, 51R is prohibited from entering the entry prohibited area.

6. The robot system 1 according to any one of claims 1 to 5, further comprising a frame 4 defining a robot cell 2.

7. A method for manufacturing a to-be-processed material, **characterized by** obtaining the to-be-processed material using the robot system 1 according to any one of claims 1 to 6.
